# DEMANDE DE BREVET EUROPEEN

(11) **EP 1 693 188 A1**
(43) Date de publication de la demande: **23.08.2006**
(21) Numéro de dépôt: 06290259.8
(22) Date de dépôt: 15.02.2006
(51) Int. Cl.: B32B 3/12, E04F 13/00

(54) **Ame en nid d'abeille**

(30) Priorité: 16.02.2005 FR 0501561
(71) Demandeur: Société Nidaplast-Honeycombs, 59224 Thiant (FR)
(72) Inventeur: Filippi, Richard, 78000 Versailles (FR); Mace, Pierre, 59300 Valenciennes (FR); Hardy, Pascal, 59000 Lille (FR)
(74) Mandataire: Laget, Jean-Loup

(57) **Abrégé**

La présente invention concerne une âme (1) en nid d'abeille telle qu'en polypropylène, destinée en particulier à la fabrication de panneaux composites par injection basse pression de résine du type infusion.

L'invention consiste en ce que ladite âme présente sur chacune de ses faces un revêtement étanche (2) à la résine tel qu'un film plastique et à l'extérieur un revêtement (3) tel qu'un polyester, ladite âme (1) étant percée à intervalles réguliers, une mèche en fibres (4) étant introduite dans chaque trou de manière à relier les deux faces de l'âme, pour être noyée dans la résine lors de l'injection de celle-ci.

Application à la fabrication de panneau composite.

## Description

La présente invention concerne une structure en nid d'abeille en polypropylène, destinée en particulier à constituer l'âme d'un panneau composite à base de résine. Un tel panneau composite est constitué de l'âme en nid d'abeille recouverte de chaque côté d'une couche de résine. Ces couches sont fabriquées par exemple avec un procédé d'injection basse pression.

Les nids d'abeille en polypropylène servent de manière habituelle à constituer l'âme de panneaux sandwichs composites à base de résine. Ils sont économiques et faciles à mettre en oeuvre au contact par projection, sous presse ou par un procédé d'injection se limitant à la fabrication de petites pièces. Les surfaces de la structure en nid d'abeille sont recouvertes d'un non tissé et d'un film plastique assurant respectivement l'accrochage de la résine sur le nid d'abeille et l'étanchéité des alvéoles.

Pour la réalisation par injection de grandes pièces, on utilise un procédé d'injection à basse pression encore appelé « infusion ». On a remarqué que les âmes en nid d'abeilles en polypropylène se prêtent mal à ce type d'injection basse pression dans la mesure où il est nécessaire d'y faire traverser l'âme par la résine pour faire passer la résine depuis le côté d'injection jusqu'à l'autre face de l'âme.

On a alors proposé de réaliser un perçage de l'âme à intervalles réguliers de manière à faciliter le passage de la résine. Cependant, la taille de ces trous étant au moins celle d'une alvéole complète, lors de la mise en oeuvre, la résine remplit entièrement chaque alvéole. Cela crée un volume de résine pure trop important entraînant des retassures (défauts liés au retrait de la résine).

Le but de l'invention est donc de proposer une âme en nid d'abeille pour la fabrication de panneaux sandwichs composites sous forme de grandes pièces par injection basse pression tout en ne présentant plus les inconvénients précités.

A cet effet, l'invention a pour objet une âme en nid d'abeille telle qu'en polypropylène, destinée en particulier à la fabrication de panneaux composites par injection basse pression de résine du type infusion, caractérisée en ce qu'elle présente sur chacune de ses faces un revêtement étanche à la résine tel qu'un film plastique et à l'extérieur un revêtement tel qu'un polyester, ladite âme étant percée à intervalles réguliers, une mèche en fibres étant introduite dans chaque trou de manière à relier les deux faces de l'âme, pour être noyée dans la résine lors de l'injection de celle-ci.

De manière avantageuse, lors d'une injection basse pression, la résine passe d'un côté à l'autre de l'âme par les trous percés dans l'âme, et ces trous comportant respectivement une mèche en fibres, la résine les remplissant n'est plus pure mais renforcée par les fibres.

On constate alors qu'il n'existe plus de retrait ou de retassure.

En outre, le pontage ainsi formé renforcé par les fibres augmente sensiblement la résistance au cisaillement de l'âme en nid d'abeilles.

La présente invention a également pour objet un procédé de fabrication d'une âme en nid d'abeille en polypropylène, destinée en particulier à la fabrication de panneaux composites par injection basse pression de résine, caractérisé en ce qu'il prévoit le revêtement de chaque face de ladite âme en nid d'abeilles par un revêtement étanche à la résine tel qu'un film plastique et à l'extérieur par un revêtement tel qu'un polyester, ladite âme étant ensuite, avant injection basse pression de résine, percée à intervalles réguliers par des aiguilles, une mèche en fibres étant introduite dans chaque trou réalisé par une aiguille ou tout autre système et qui, mise en place dans l'âme, relie les deux faces de l'âme.

Il est possible de faire varier le pas des aiguilles et la dimension des mèches en fibres soit pour faciliter le passage de la résine soit pour augmenter la résistance au cisaillement.

Selon d'autres caractéristiques :
- le revêtement est un tissé ou un non tissé,
- les fibres sont des fibres de verre ou des fibres organiques,
- le pontage formé par les fibres noyées dans la résine augmente la résistance au cisaillement de ladite âme en nid d'abeille,
- la rigidité des fibres améliore la tenue en température de ladite âme en nid d'abeille.

L'invention a également pour objet un procédé de liaison de panneaux composites comportant respectivement une âme telle que précédemment décrite, dans lequel un ruban de fibres de verre est disposé entre deux panneaux à joindre avant l'injection de résine entre les deux panneaux.

Le ruban de fibres de verre présente une épaisseur identique à celle du nid d'abeilles des panneaux à relier.

Un tel procédé permet avantageusement d'éviter les inconvénients des techniques précédentes qui consistaient soit à ponter la jonction des deux panneaux par une base étanche à la résine soit à remplir les alvéoles coupées situées en bordure des panneaux par un mastic allégé.

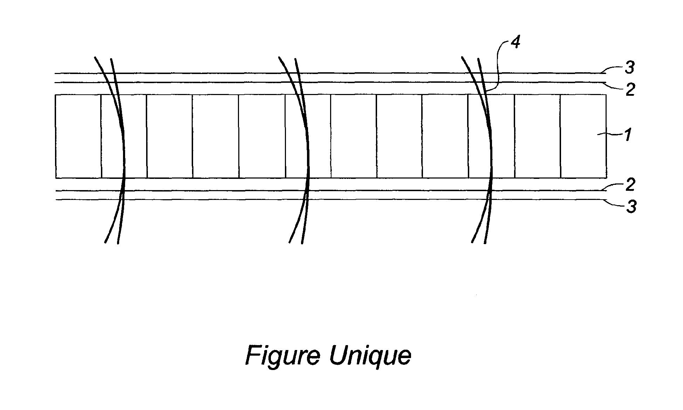

On décrira maintenant l'invention plus en détail en référence au dessin dans lequel la figure unique représente de manière schématique une âme en nid d'abeilles selon l'invention.

L'âme en nid d'abeille 1 telle qu'en polypropylène, destinée en particulier à la fabrication de panneaux composites par injection basse pression de résine, selon l'invention présente sur chacune de ses faces un revêtement étanche à la résine tel qu'un film plastique 2 et à l'extérieur un revêtement, tissé ou non tissé, tel qu'un polyester 3.

L'âme 1 est en outre percée à intervalles réguliers par des aiguilles. Dans chaque trou percé, est introduite une mèche en fibres 4 de manière à relier les deux faces de l'âme 1. Les mèches 4 sont par exemple en fibres de verre ou en fibres organiques.

L'âme ainsi pourvue de mèches en fibres 4 est introduite dans un moule d'injection basse pression.

La résine est introduite d'un côté de l'âme 1 et traverse celle-ci à travers les trous percés munis des mèches de fibres 4. Les mèches de fibres 4 sont ainsi noyées dans la résine.

Les alvéoles correspondant aux trous formés pour le passage de la résine ne sont donc plus remplies de résine pure mais de résine renforcée par les mèches de fibres 4 ce qui évite les effets de retassure et de retrait de la résine pure. Le pontage ainsi formé, renforcé par les mèches de fibres augmente sensiblement la résistance au cisaillement du panneau à nid d'abeille. De plus, la rigidité des fibres 4, notamment lorsqu'elles sont en verre, compense la faiblesse du polypropylène lorsque le matériau est soumis à de fortes températures.

Le procédé de fabrication selon l'invention permet la réalisation par infusion de pièces esthétiques de grandes dimensions.

L'invention a été décrite dans un exemple de réalisation, mais elle en couvre les équivalents techniques.

## Revendications

1. Ame (1) en nid d'abeille telle qu'en polypropylène, destinée en particulier à la fabrication de panneaux composites par injection basse pression de résine du type infusion, **caractérisée en ce qu'**elle présente sur chacune de ses faces un revêtement étanche (2) à la résine tel qu'un film plastique et à l'extérieur un revêtement (3) tel qu'un polyester, ladite âme (1) étant percée à intervalles réguliers, une mèche en fibres (4) étant introduite dans chaque trou de manière à relier les deux faces de l'âme, pour être noyée dans la résine lors de l'injection de celle-ci.

2. Ame en nid d'abeille selon la revendication 1, **caractérisée en ce que** le revêtement extérieur (3) est un non tissé.

3. Ame en nid d'abeille selon la revendication 1, **caractérisée en ce que** le revêtement extérieur (3) est un tissé.

4. Ame en nid d'abeille selon la revendication 1, **caractérisée en ce que** les fibres (4) sont des fibres de verre.

5. Ame en nid d'abeille selon la revendication 1, **caractérisée en ce que** les fibres (4) sont des fibres organiques.

6. Ame en nid d'abeille selon les revendications 1 à 5, **caractérisée en ce que** le pontage formé par les fibres (4) noyées dans la résine augmente la résistance au cisaillement de ladite âme en nid d'abeille.

7. Ame en nid d'abeille selon la revendication 1, **caractérisée en ce que** la rigidité des fibres (4) améliore la tenue en température de ladite âme en nid d'abeille (1).

8. Procédé de fabrication d'une âme (1) en nid d'abeille en polypropylène, destinée en particulier à la fabrication de panneaux composites par injection basse pression de résine,
**caractérisé en ce qu'**il prévoit le revêtement de chaque face de ladite âme (1) en nid d'abeilles par un revêtement (2) étanche à la résine tel qu'un film plastique et, à l'extérieur, par un revêtement (3) tel qu'un polyester, ladite âme étant ensuite, avant injection base pression, percée à intervalles réguliers par des aiguilles, une mèche en fibres étant introduite dans chaque trou réalisé par une aiguille ou tout autre système et qui, mise en place dans l'âme, relie les deux faces de l'âme.

9. Procédé de liaison de panneaux composites comportant respectivement une âme selon l'une des revendications 1 à 7,
**caractérisé en ce qu'**un ruban de fibres de verre est disposé entre deux panneaux à joindre avant l' injection de résine entre les deux panneaux.

10. Procédé selon la revendication 9,
**caractérisé en ce que** le ruban de fibres de verre présente une épaisseur identique à celle du nid d'abeilles des panneaux à relier.
